Europäisches Patentamt

European Patent Office

Office européen des brevets

(11) Publication number: 0 160 304
A2

# EUROPEAN PATENT APPLICATION

(21) Application number: 85105296.9

(22) Date of filing: 30.04.85

(51) Int. Cl.⁴: G 01 N 21/21
G 01 N 33/34

(30) Priority: 01.05.84 JP 88822/84

(43) Date of publication of application:
06.11.85 Bulletin 85/45

(84) Designated Contracting States:
DE SE

(71) Applicant: KANZAKI PAPER MANUFACTURING
COMPANY LIMITED
9-8, Ginza 4-chome Chuo-ku
Tokyo 104(JP)

(72) Inventor: Miyamoto, Seiichi c/o Kanzaki Factory Kanzaki
Paper Mfg. Co., Ltd. 1-11, Johkohji-Motomachi
Amagasaki-shi Hyogo-ken(JP)

(72) Inventor: Ono, Youichi c/o Kanzaki Factory Kanzaki
Paper Mfg. Co., Ltd. 1-11, Johkohji-Motomachi
Amagasaki-shi Hyogo-ken(JP)

(72) Inventor: Yamashita, Michihiro Kanzaki Factory Kanzaki
Paper Mfg. Co., Ltd. 1-11, Johkohji-Motomachi
Amagasaki-shi Hyogo-ken(JP)

(74) Representative: Patentanwälte TER MEER - MÜLLER -
STEINMEISTER
Mauerkircherstrasse 45
D-8000 München 80(DE)

(54) Method and apparatus for measuring the fiber orientation of papers.

(57) A method and an apparatus for measuring the fiber orientation of papers (14) that include throwing the infrared light to papers of a cutting out test from paper products or a moving sheet on a paper machine, wherein the infrared light being transmitted through or reflected by papers, is measured to detect the degree of attenuation caused by the absorption effects of the papers (14). The measurement is made with polarized infrared light and the direction of polarization is changed. The detection signals are processed so as to indicate the fiber orientation as a plot in polar coordinates. Alternatively, the polarization may be first made before throwing the infrared light at a paper sample, linearly polarizing it and changing the direction of polarization. The plot indicated on polar coordinates takes the form of an ellipsoid having its major axis coinciding with the axis of the main orientation of the fibers.

FIG. 5

Dipl.-Chem. Dr. N. ter Meer  Dipl.-Ing. H. Steinmeister
Dipl.-Ing. F. E. Müller
Mauerkircherstr. 45          Artur-Ladebeck-Strasse 51
D-8000 MÜNCHEN 80            D-4800 BIELEFELD 1

Mü/cb

F-326                                    April 30, 1985


KANZAKI PAPER MFG. CO., LTD.

9-8, Ginza 4-chome

Chuo-ku, Tokyo, Japan

---

METHOD AND APPARATUS FOR MEASURING THE FIBER

ORIENTATION OF PAPERS

---

Priority: May 1, 1984, Japan, No. Sho59-88822 (P)


The present invention relates to the method and apparatus for measuring the fiber orientation of papers.

Any paper being manufactured by a paper machine tends to have its fibers uniformly aligned in one or other direction, and the extent of such orientation tendency influences various properties of the paper. For this reason, constantly the same orientation of the fibers should be secured to the best possible extent throughout a particular lot of paper being manufactured. The orientation of fibers is related with the strength, gloss, and other properties of paper. Non-uniformity of the fiber orientation may cause uneven coating color profile for coated paper. With such fiber orientation, dimensional stability of the paper will be non-uniformly changed by humidity fluctuations in the air. Both effects may result in curls and cockles. Such orientation of the fibers is generated mainly by viscous force of the pulp suspension and by dragging force between a paper stock and a wire cloth, both of which occur when the pulp suspension is being jetted at a high speed from the head box on to a rapidly running wire cloth. The orientation varies with time and also in the cross direction of the paper on the machine. Orientation may be intensified so much as to break the paper at its wet end, if an operator during an operation causes a slice jet to shoot at an improper position, or sets a breast roll, a wire and a forming board in the wrong relative locations. It is desirable, therefore, that the orientation of the fibers is constantly monitored and the result is fed back to the paper-making process immediately. This requirement is not satisfied by the conventional procedures.

The conventional testing procedures for identifying the fiber orientation includes sampling of paper from the final reel-part of the paper machine, cutting out test piece strips of all directions from the sample, and subjecting them to a mechanical test of the tensile strength, to X-ray diffractometry of the fiber crystals, or to a spectral analysis of viscoelasticity. Either of these testing methods needs much time before the results are found to be satisfactory or not. And by that time a great amount of defective paper will have been produced even if the test reveals a defect. The recent speed-up and paper-widening trend in paper-making operation is increasing the waste and loss due to such conventional slowness in feeding back test results to the process. Furthermore, in whatever shorter time a fiber orientation may be identified by measurement, the method of cutting out a sample from paper running on the machine is limited by the allowable frequency of such cutting, and cannot solve the problem of slowness.

It is an object of the present invention to provide a methode for measuring the fiber orientation of paper products or of paper running on a paper machine without contacting the paper.

Another object of the invention is to provide a method of showing the orientation of the fibers by converting measurement values to a plot with polar coordinates. Yet another object of this invention is to present an apparatus for determining the fiber orientation of paper easily and accurately.

Moisture contained in paper comprises water held by capillarity, water bound with fibers, and water absorbed by this bound water by means of intermolecular attraction. In general, when a water content is below 10 percent, most part of the water contained comprises bound and absorbed waters. Because bound water is the water bound with fibers by hydrogen bonding, the molecules of bound and absorbed waters follow a direction taken by the fibers. Accordingly, if fibers are oriented, water bound with fibers and water absorbed by fibers will similarly be oriented relative to the outside. Water molecules have an absorption band in the vicinity of a wavelength of 1.95 microns and near the infrared region, and the absorptance varies with the  relationship between the direction of the water molecules and the plane of the polarized light. For this reason, absorptance variations within such an absorption band, as measured while changing the plane of the polarized light, will indicate the paper fiber orientation rapidly and without contacting the paper. This is the principle of the present invention. The wavelength of light to be used for this purpose, which in the above description is 1.95 microns for convenience, will not be limited to this purpose. Water molecules have other additional absorption bands such as 1.30, 1.46 and 1.90 microns, and moreover, the absorption bands of fibers themselves are expected to similarly respond to polarized light. Any other wavelengths at which absorptance responds to light polarity in correspondence with the orientation of the fibers may be applicable.

For both transmission and reflection types in the present invention, the apparatus is covered by a hood, leaving uncovered only light paths for infrared rays impinging on the paper and passing through or being reflected by the paper, so as to minimize the influence of external light. The hood for the transmission type naturally comprises two blocks, one block on the light source side, and the other on the light receiving side. A distance between the light source side and the light receiving side units should be minimized to the best practicable extent. A desirable distance for the transmission type is, for measuring a sample of paper stationarily laid, about 10 mm to leave a space that facilitates insertion of the sample, and for measuring a running shett of paper, is about 20 mm at most, avoiding to contact and injure the flapping sheet of paper. For the reflection type, it is suitable that the apparatus be held in a distance of about 10 mm from the paper.

Changes of paper surface conditions will result in fluctuation of the surface reflectance and of the refractive index, leading to changes in the light energy level after reflection and transmission.

In order to discard these variable factors, one or two additional wavelengths which are not absorbed by bound or absorbed water are selected as reference light for measuring the orientation of the fibers in a running sheet of paper on the machine. The reference light is also used for eliminating those effects of variable factors on energy level received by the sensor which are caused by changes of diffused reflectance or diffused transmittance due to differences in the density and composition of the paper.

The following further considerations are for preventing of fluctuations and external disturbances.

(a) An infrared sensor (PbS in the case of the embodiments described herein) which is highly temperature-dependent should desirably be designed to be thermostatic by appropriate means, such as an electronically working cooling device attached to the sensor.

(b) A hood should be provided for the apparatus in order to eliminate influences from all light originating from other sources (sunshine, room lamps, etc.). In addition, it is effective for this purpose to insert in the light-receiving side part of the apparatus a filter that screens visible lights.

(c) The power supply for the light source should be secured to be stable.

(d) The S/N ratio should be maximized by enhancing the light source power (use of a halogen or xenon lamp is preferable), by using an infrared filter of good transmission properties, and by designing circuits of low inherent noise.

Other and further objects, features and advantages of the present invention will be more fully understood from the following description.

Fig. 1    is a side elevation of the embodiment of a single wavelength transmission type apparatus implementing the present invention method;

Fig. 2A   is a plot obtained by the invention showing the fiber orientation of papers;

Fig. 2B   shows plots of fiber orientations at three locations in the cross directions of the paper;

Fig. 3    is a block diagram of the apparatus in Fig. 1;

Fig. 4    is a timing chart for the apparatus in Fig. 3;

Fig. 5    is a side elevation of a two-wavelength transmission type apparatus implementing  the present invention;

Fig. 6    is a side elevation of another two-wavelength transmission type apparatus;

Fig. 7    is a side elevation of a two-wavelength reflection type apparatus;

Fig. 8    is a block diagram of the apparatus shown in Figs. 5 through 7; and

Fig. 9    is a signal timing chart for the apparatus shown in Fig. 8.

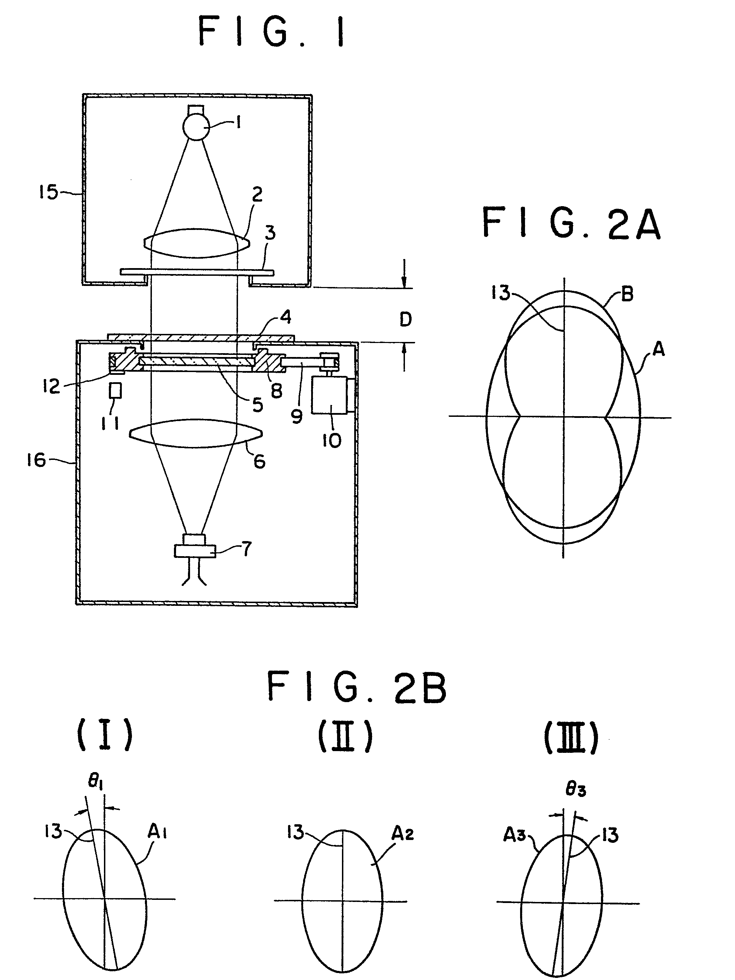

Fig. 1 shows an apparatus that implements the method of holding a sample stationary, and measuring the orientation of the fibers without contacting the sample. A light source 1 is a halogen lamp. Alternatively, incandescent lamp, xenon lamp or another appropriate lamp may be applicable. The light from the light source 1 is brought to a flux of parallel rays by means of a collimator lens 2, then converted to a specified wavelength by means of a filter 3, and is thrown perpendicular on a sample. The filter 3 used here is an interference filter with a transmission wavelength of 1.95 microns, as peak wavelength, a maximum transmittance of more than 60%, and a half-width of about 40 nm. The light that has transmitted through the sample 4 passes through a polarizer 5, such as an HR-type linear polarizing disc and is condensed by a condensor lens 6 on to a PbS infrared sensor 7.

The polarizer 5 is held by a ring-shaped pulley 8, which is rotated by a motor 10 by means of a timing belt 9. A reflection-type photoelectric switch 11 detects a synchronizing mark 12, such as a white line, provided at a location on the circumference of the pulley 8, so that a detection signal from the photoelectric switch 11 is given at every rotation of the polarizer 5.

When infrared light is impinging on the sample 4, the photoelectric switch 11 will give pulse signals according to the rotation of the polarizer 5, and at the same time, the infrared sensor 7 will output detection signals following a sine-wave. As the output signals of the infrared sensor 7 are converted on an elliptical plot and polar coordinates, Plot A in Fig. 2A indicates the orientation of the fibers by radials on the coordinates. Plot B in Fig. 2A was received by cutting test piece straps of all directions from the same sample as for Plot A, measuring their tensile strength by a tensile tester, and showing the angles formed by individual test pieces against the paper machine direction, plotted as a function of their respective tensile strength. The strength values are highest for those test pieces which are cut in parallel with the machine direction, and lowest for those cut in the cross direction. Although having some waist in the cross direction, still the major axis 13 of the Plot B semi-ellipsoids coincides with that of the Plot A ellipsoid, proving that the configuration of Plot A is mainly oriented along the major axis 13 of the ellipsoid A which is the axis of the main fiber orientation. Fig. 2B shows plots of three samples taken individually from the center and both sides of the paper on the machine in the cross direction, each indicating the identified fiber orientation as measured at the individual locations. Plot II of Fig. 2B represents the center of the cross direction, and shows that the paper stream direction coincides with the direction of the major axis 13 of the ellipsoid A2 in the plane of the polar coordinates, i.e., the axis of the main orientation of the fibers. In Plots I and III of the same figure, the main orientation axises of ellipsoids A1 and A3 are observed to be slightly deviated from the direction of paper stream by angles $\theta 1$ and $\theta 3$, respectively.

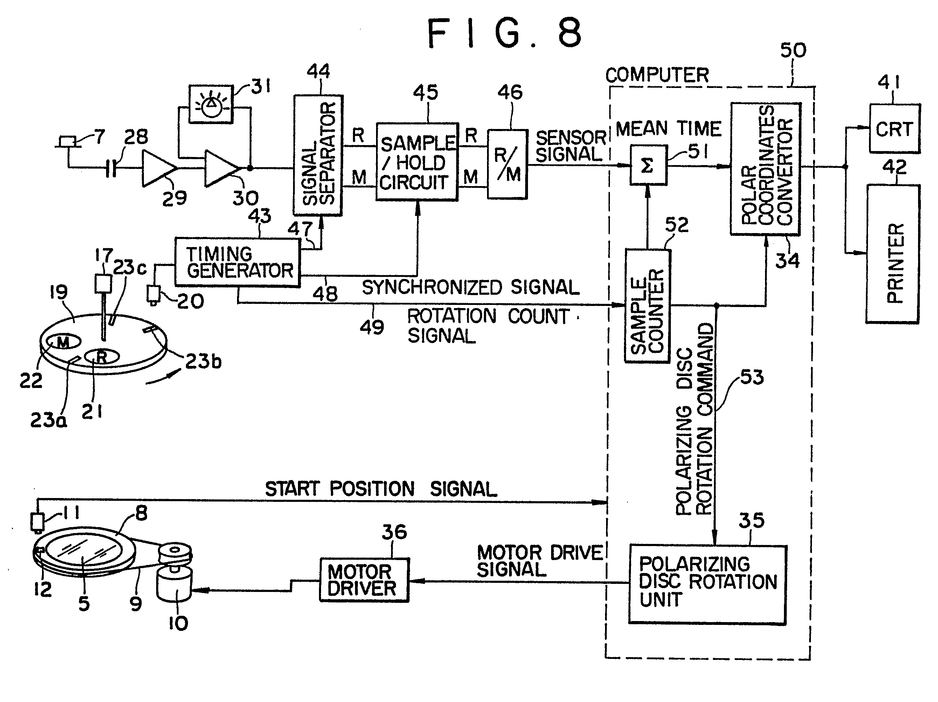

The apparatus is covered by hoods so as to shield the light source unit 15 and light receiving unit 16, respectively, from the influences of external lights, leaving uncovered however the light paths from the light source and for the transmitted light. Distance D between the light source unit 15 and the light receiving unit 16 is kept appropriately, for example about 10 mm, so as to facilitate the insertion of a sample. The location of the polarizer 5 which, in the structure of the apparatus in Fig. 1, is on the transmitted light side of the paper 4, may alternatively be on the incident light side. The apparatus which is a single wavelength transmission type in Fig. 1, may be replaced by a single wavelength reflection type. The reflection type apparatus of Fig. 7 described hereinafter is a two wavelength reflection type, but a single wavelength reflection type (not shown by a drawing) is also acceptable.

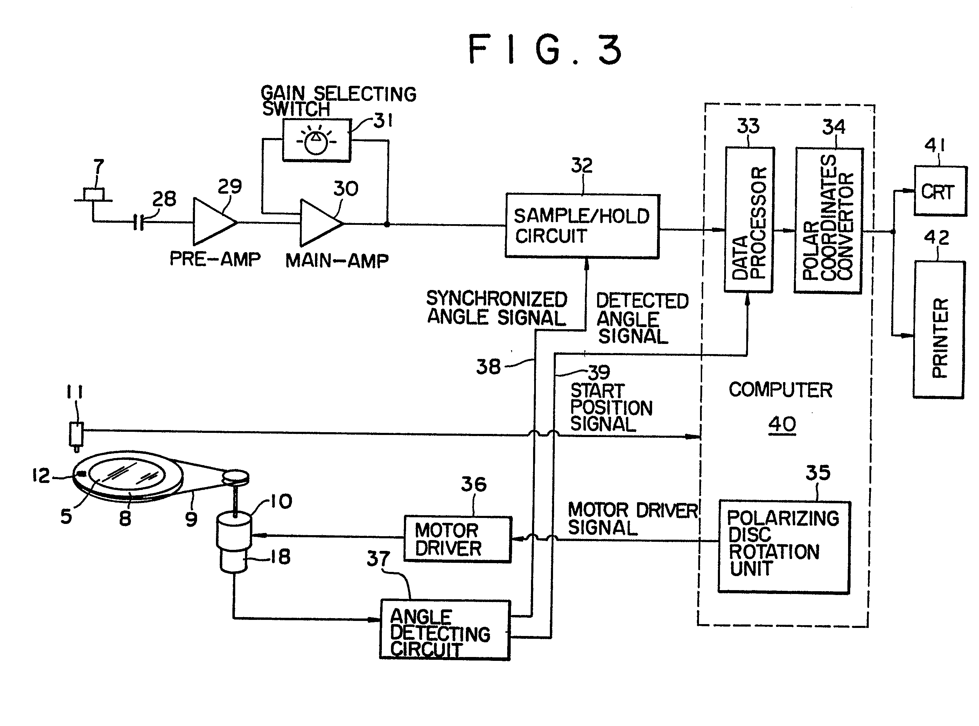

Fig. 3 shows a block diagram that includes a control system for the apparatus illustrated in Fig. 1. Those parts in Fig. 3 which are identical with the parts appearing in Fig. 1 are given the same numerals. Infrared rays pass through an interference filter, a sample and a polarizer, and reach an infrared sensor 7. The level of an output from the infrared sensor 7 is maximized when the axis of main fiber orientation coincides with the plane of the polarized light, is gradually lowered as the plane of the polarized light rotates, and is minimized when the plane perpendicularly intersects with the axis of the main fiber orientation. This analog signal output passes through a condensor 28-, a preamplifier 29, and a main amplifier 30, where it is amplified and is supplied to the input of a sample and hold circuit 32. Before that, an optimum amplification ratio for the given transmittance level has been accomplished by adjustment with a gain-selecting switch 31. The sample and hold circuit 32 receives polarizer angle synchronizing signals from an angle-detecting circuit 37 through a line 38, holds the infrared detection signals on the time base, and then outputs the signals to the data processor 33 of a computer 40, where this output, together with the angle detection signals coming in through a line 39, are processed and stored as data. On the basis of this data, a polar coordinates convertor 34 converts a sine-waveform to a plot in polar coordinates which is visualized on a cathode ray tube 41, and is at the same time recorded by a printer 42.

Meanwhile, given instructions from a polarizing disc rotation unit 35 are supplied to a motor driver 36 that activates a very low speed synchronous motor 10 to rotate a polarizer 5. A mark 12 on the circumpherence of the rotating polarizer 5 is detected by a photoelectric switch 11, which gives a start position signal to the data processor 33.

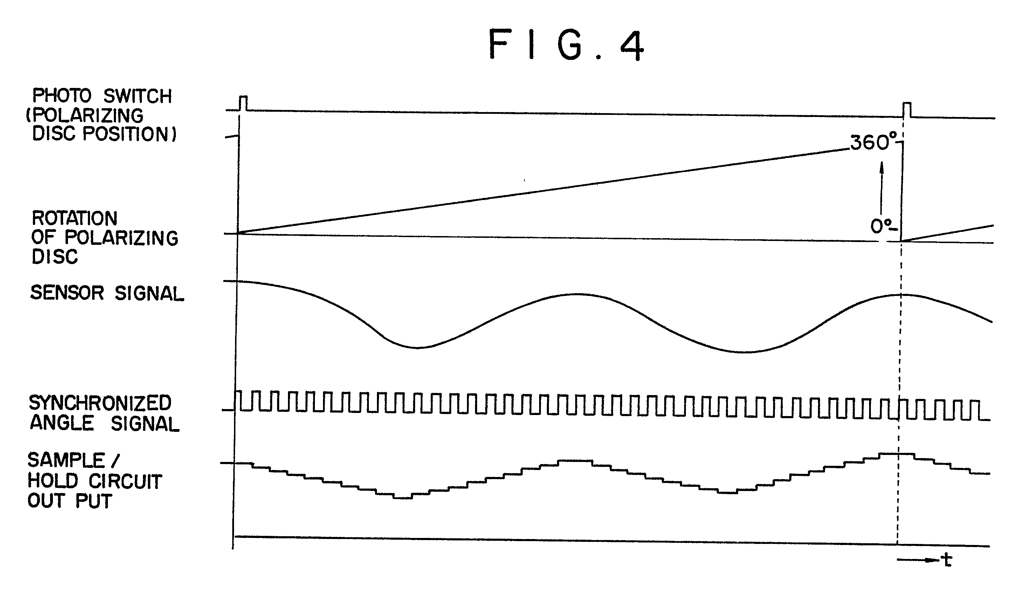

Signals from a rotary encoder 18, which is attached to said synchronous motor 10, is processed by the angle detecting circuit 37 and, as described above, are sent in the form of angle signals to the data processor 33 through line 39. Fig. 4 shows the timing chart of waveforms for individual sections of this apparatus.

For paper being held stationary, a single infrared wavelength which is absorbable by water is sufficient. However, for a running sheet of paper on the machine, or for measuring any quantitative changes of orientation, where the composition, density or surface conditions of the paper tend to cause errors in the measurements, at least two infrared wavelengths are used and are necessary to eliminate the effects of these factors. The absorption peaks of liquid water exist around 1.95 microns and around 1.46 microns. That of cellulose is at around 2.9 microns, while the spectral transmission property of cellulose below 2 microns is charateristically flat. For these reasons, the selection of 1.8 or 1.7 microns as a reference wavelength can ensure that, without being affected by the orientation of water molecules or that of fiber and thus by the plane of polarized light, the attenuation of light during its transmission through paper can provide correct information regarding the composition, density and surface conditions of the paper.

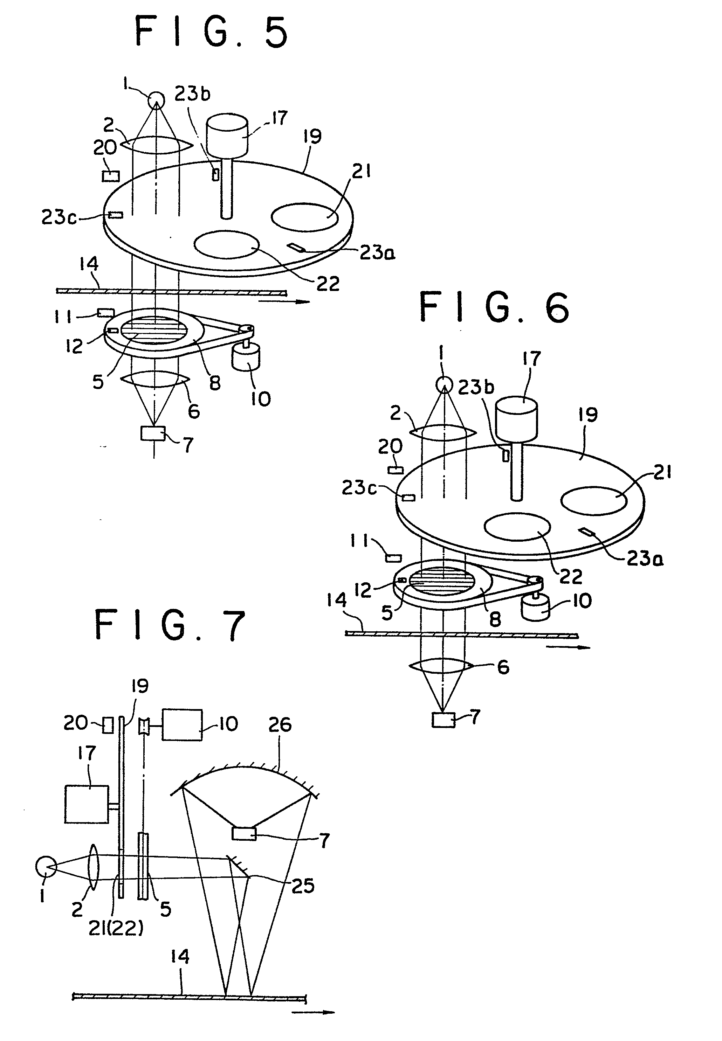

Fig. 5 shows an embodiment of the two-wavelength method. The same nuemrals as those used in Fig. 1 are given to the corresponding parts of Fig. 1 without specific descriptions.

- 11 -

0160304

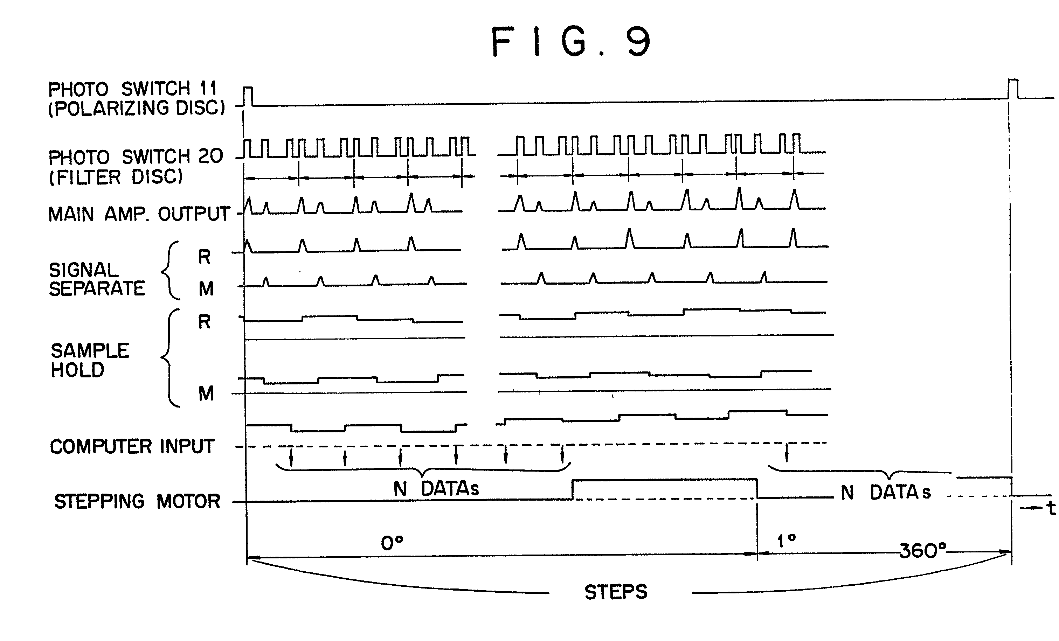

In this embodiment, the polarizer 5 is located on the side of the transmitted light, so that it polarizes light which has passed through a sample 14 running on the machine. A filter disc 19 serves as a holder for two types of interference filters 21 and 22, and is rotated by a motor 17 at a speed of, for instance, 1,800 r.p.m. The filter 21 transmits light of a wavelength of 1.95 microns, and the filter 22 transmits light of a wavelength of 1.8 microns. On the circumference of the filter disc 19, a disc rotation synchronizing mark 23a and also filter rotation synchronizing marks 23b and 23c for the filters 21 and 22, respectively, are provided, so that passing of every one of these marks causes the photoelectric switch 20 to give a pulse signal (see Fig. 9).

The location of the polarizer 5, which is on the lower side, i.e. the side of light having passed the sample 14 running on the machine, may be well placed on the upper side, i.e. the light incident side, of the sample 14 as illustrated in Fig. 6, with similar results. The apparatus type of Fig. 5 or Fig. 6 whould preferably be provided in an appropriate plural number aligned in the cross direction of a paper stream. In the case of a single apparatus scanning in the cross direction, which is another acceptable configuration, a transmission type is permissible but a reflection type, as described in relation to Fig. 7, is more suitable.

Fig. 7 is an embodiment of a reflection type. The flux of infrared light which has been converted to linear polarized light by means of a polarizer 5 is reflected by a mirror 25, and thrown at a sample 14 running on the machine. Light reflected by the surface of the paper diffuses, and is condensed on an infrared sensor 7 by a concave mirror 26. This type, where the whole of the apparatus stands on one side of the paper 14, is favorable for mounting the apparatus to a portal shaped frame and scanning a stream of paper in the cross dircetion.

Fig. 8 is an overall block diagram of the apparatuses shown in Figs. 5 through 7 including their control system. An output from an infrared sensor 7, after being amplified, passes a signal separator circuit 44, a sample and hold circuit 45, and an R/M (division) circuit 46, and reaches the mean time (averaging) circuit 51 of a computer 50. As said filter disc 19 rotates, the output from the photoelectric switch 20 enters a timing generator 43, from which a R and M separation signal, synchronizing signals, and a filter disc rotation count signal are supplied passing via lines 47, 48 and 49 to said signal separator circuit 44 and the sample and hold circuit 45, and also to the sample counter circuit 52 in the computer 50. Said mean time circuit 51 receives infrared sensor signals and also the count signals entering from the sample counter circuit 52, and processes these data by a polar coordinates converter circuit 34, so that the results are displayed on a cathode ray tube 41, or are recorded by a printer 42. A part of the output from the counter circuit 52 is used as a polarizing disc rotation command 53, which is fed to a polarizing disc rotation unit 35 to give motor drive instructions to a motor driver 36, so that a motor 10 is rotating stepwise. Fig. 9 shows a timing chart of output waveforms for individual sections in Fig. 8. In this case, the fiber orientation of sample 14 can be indicated by an ellipsoid, with its major axis coinciding with the main axis of the fiber orientation, as illustrated in Fig. 2A.

When three filters are used together, comprising a filter that transmits a wavelength absorbable by water, and two filters which transmit two different wavelengths which are almost entirely not absorbable by water

(reference wavelengths), in order to further eliminate effects from all changing conditions except those from the orientation of fibers, the three types of filters should be disposed appropriately on the rotating filter disc 19.

The present invention eliminates the necessity of cutting out test pieces from paper, and even of contacting the paper, for measuring the orientation of its fibers. Paper running on the machine can be directly measured for control purposes.

Furthermore, the invention enables virtually continuous monitoring of fiber orientation. During a single rotation of the polarizer, the axis of the fiber orientation and the plane of polarized light become parallel and then perpendicular to each other twice. Since the orientation of the fibers can be detected after a cycle of such paralleling and crossing, one rotation of the polarizer gives two measurements of the fiber orientation. The speed of the polarizer can be enhanced as desired so far as mechanical restrictions permit. In effect, nearly a continuous monitoring of paper running on the machine is feasible.

## C L A I M S

1. A method for measuring the fiber orientation of paper (14) comprising: filtering collimated infrared light for extracting a specified wavelength, projecting said infrared light of specified wavelength on the paper (14), passing said infrared light through a rotating polarizer (5) either before or after such projecting, condensing the transmitted light, detecting the levels of condensed light by an infrared sensor (7), and discriminating the values detected by said sensor (7).

2. A method for measuring the fiber orientation of paper (14) comprising: filtering collimated infrared light for extracting a specified wavelength, passing said infrared light through a rotating polarizer (5), projecting said rotatingly polarized infrared light on paper (14), condensing the light reflected by the surface of paper, detecting the levels of said reflected light by an infrared sensor (7) and discriminating the values detected by said sensor (7).

3. A method as claimed in claim 1 or 2, wherein said collimated infrared light is filtered to at least one wavelength in the vicinity of the absorption band(s) of water molecules.

4. A method as claimed in claim 3, wherein said one wavelength is the one selected from the group consisting of 1.30 µm, 1.46 µm, 1.90 µm and 1.95 µm.

5. A method as claimed in claim 3, wherein if two wavelengths are filter-selected those two wavelengths comprise one selected from the group consisting of 1.30 µm, 1.46 µm, 1.90 µm and 1.95 µm, and either one

of 1.7 μm or 1.8 μm.

6.      A method as claimed in claim 1 or 2, wherein signal values detected by said sensor (7) are analog output signals, then converted to digital signals, and further processed and displayed in a polar coordinates plane.

7.      An apparatus for measuring the fiber orientation of paper (14) comprising: an infrared light source (1), a lens (2) that collimats infrared light, an interference filter (3) disposed below said lens (2), a rotating polarizer (5) provided below said filter (3), a means (8, 9, 10) for rotating said rotating polarizer (5), a means (35, 36) for generating the synchronized rotating signals for said polarizer (5), a condensor lens (6), and infrared sensor (7) that detects the signal level of the transmitted infrared light after being condensed by said condensor lens (6), and a computer (40) that processes the signals detected by said sensor (7).

8.      An apparatus as claimed in claim 7, further comprising a first hood (15) which covers said light source (1), said lens (2) and said interference filter (3), leaving uncovered a path for throwing said infrared light on paper (14), and a second hood (16) which covers said rotating polarizer (5), said means (8, 9, 10) for rotating said rotating polarizer, and said means (35, 36) for generating the synchronized rotating signals for said polarizer (5), said condensor lens (6) and said infrared sensor (7) detecting the signal level of infrared light after transmission through paper (14), leaving uncovered a path for said infrared light after transmission, and a sufficiently wide distance (D) between the first and second hoods (15, 16) for inserting the paper (14).

9.      An apparatus as claimed in claim 7, further comprising a first hood (15) which covers the light source (1), said lens (2), said interference filter (3), said rotating polarizer (5), said means (8, 9, 10) for rotating said rotating polarizer (5), and said means (35, 36) for generating the synchronized rotating signals for said polarizer (5), leaving uncovered a path for throwing said infrared light on the paper (14), and a second hood (16) which covers the condensor lens (6) and said infrared sensor (7) detecting the signal level of infrared light after transmission through said paper (14), leaving uncovered a path for said infrared light after transmission, and a sufficiently wide distance (D) between the first and second hoods (15, 16) for inserting the paper (14).

10.    An apparatus for measuring the fiber orientation of paper (14) comprising: an infrared light source (1), a lens (2) that collimats said infrared light, an interference filter (3) disposed on the lateral side of said lens (2), a rotating polarizer (5) provided on the downstream light flux side of said interference filter (3), a means (9, 10) for rotating said rotating polarizer (5), a means for generating the synchronized rotating signals of said polarizer (5), a reflective mirror (25) that throws the infrared light from said rotating polarizer (5) on paper (14), a means (26) for condensing the infrared light reflected by the surface of the paper, an infrared sensor (7) provided at a location where said condensing means focusses the infrared light, and a computer (40) which processes the detected signals of said infrared sensor (7).

11.    An apparatus as claimd in claim 10, further comprising a hood which covers said light source, said lens, said interference filter, said rotating polarizer, said means for rotating said rotating polarizer, said means for generating synchronized rotating signals of said polarizer, said reflective mirror, said means for condensing the reflected infrared light, and said infrared sensor, leaving uncovered a path for throwing and reflecting the infrared light.

12. An apparatus as claimed in claim 7, 8, 9, 10 or 11, wherein said interference filter (3) allows transmission from said infrared light to a specified wavelength in the vicinity of an absorption band of water molecules.

13. An apparatus as claimed in claim 7, 8, 9, 10, 11 or 12, wherein said interference filter (3) comprises one filter allowing the transmission of either one of peak wavelengths of 1.30 µm, 1.46 µm, 1.90 µm or 1.95 µm.

14. An apparatus as claimed in claim 7, 8, 9, 10, 11 or 12, wherein said interference filter (3) comprises one filter allowing the transmission of either one of the peak wavelengths of 1.30 µm, 1.46 µm, 1.90 µm or 1.96 µm, and another filter allowing the transmission of either one of the peak wavelengths of 1.7 µm or 1.8 µm.

15. An apparatus as claimed in claim 14, wherein said interference filters are installed on a rotary disc (19).

16. An apparatus as claimed in claim 7 or 10, wherein said computer (40) converts the detected signals of the infrared sensor (7) to an angle value of the rotating polarizer (5) in a polar coordinates plot.

# FIG. 1

# FIG. 2A

# FIG. 2B

(I)          (II)          (III)

# FIG. 3

GAIN SELECTING SWITCH

31

7

28

29 PRE-AMP

30 MAIN-AMP

32 SAMPLE/HOLD CIRCUIT

33 DATA PROCESSOR

34 POLAR COORDINATES CONVERTOR

41 CRT

42 PRINTER

SYNCHRONIZED ANGLE SIGNAL

DETECTED ANGLE SIGNAL

38

39 START POSITION SIGNAL

COMPUTER 40

11

12

5  8  9

10

18

36 MOTOR DRIVER

MOTOR DRIVER SIGNAL

35 POLARIZING DISC ROTATION UNIT

37 ANGLE DETECTING CIRCUIT

KANZAKI PAPER MFG. CO., LTD.
F-326

0160304

2/6

# F I G . 4

PHOTO SWITCH
(POLARIZING
DISC POSITION)

ROTATION
OF POLARIZING
DISC

SENSOR SIGNAL

SYNCHRONIZED
ANGLE SIGNAL

SAMPLE /
HOLD CIRCUIT
OUT PUT

360°

0°

—→t

KANZAKI PAPER MFG. CO., LTD.
F-326

0160304

FIG. 5

FIG. 6

FIG. 7

# FIG.8

KANZAKI PAPER MFG. CO., LTD.
F-326

0160304

5/6

# FIG. 9

PHOTO SWITCH 11
(POLARIZING DISC)

PHOTO SWITCH 20
(FILTER DISC)

MAIN AMP. OUTPUT

SIGNAL
SEPARATE { R
{ M

SAMPLE
HOLD { R
{ M

COMPUTER INPUT

STEPPING MOTOR

N DATAs          N DATAs          t

0°          1°          360°

STEPS

KANZAKI PAPER MFG. CO., LTD.
F-326

0160304

6/6